# EUROPÄISCHE PATENTSCHRIFT

(11) **EP 3 359 810 B1**
(45) Veröffentlichungstag und Bekanntmachung des Hinweises auf die Patenterteilung: **10.11.2021**
(21) Anmeldenummer: 16778035.2
(22) Anmeldetag: 07.10.2016
(51) Int. Cl.: F03D 17/00, F03D 80/40

(54) **VERFAHREN ZUM ÜBERWACHEN EINER WINDENERGIEANLAGE**
METHOD FOR MONITORING A WIND TURBINE
PROCÉDÉ DE SURVEILLANCE D'UNE ÉOLIENNE

(30) Priorität: 07.10.2015 DE 102015117032
(43) Veröffentlichungstag der Anmeldung: 15.08.2018
(73) Patentinhaber: Wobben Properties GmbH, 26607 Aurich (DE)
(72) Erfinder: STOLTENJOHANNES, Jürgen, 26605 Aurich (DE)
(74) Vertreter: Eisenführ Speiser
(86) Internationale Anmeldenummer: PCT/EP2016/074004
(87) Internationale Veröffentlichungsnummer: WO 2017/060430

(56) Entgegenhaltungen:
- EP-A1- 2 808 544
- US-A1- 2008 141 768
- US-A1- 2008 164 091
- US-A1- 2014 193 257
- US-B1- 8 757 003

## Beschreibung

Die vorliegende Erfindung betrifft ein Verfahren zur Überwachung einer Windenergieanlage, sowie ein Verfahren zum Steuern einer Windenergieanlage. Und die Erfindung betrifft eine Windenergieanlage.

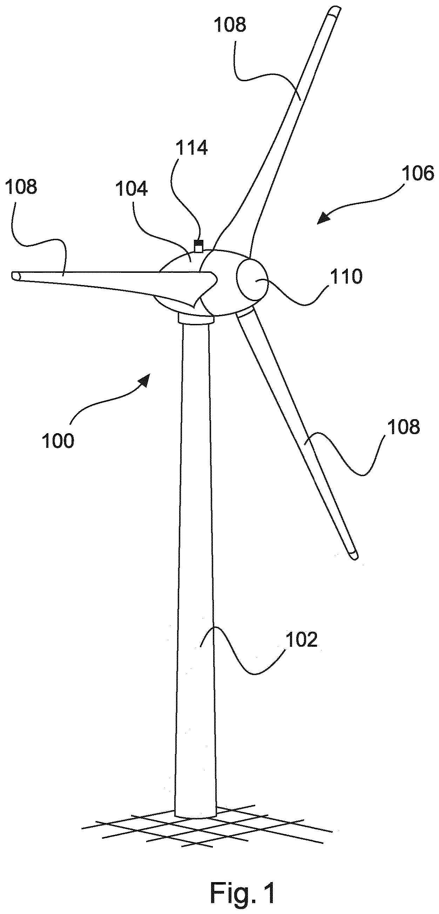

Windenergieanlagen, die aus Wind elektrischen Strom erzeugen und diesen in ein elektrisches Versorgungsnetz einspeisen, sind allgemein bekannt. Ein Beispiel einer solchen Windenergieanlage ist schematisch in Fig. 1 dargestellt.

Für eine effektive Steuerung einer solchen Windenergieanlage ist es besonders vorteilhaft, den Betriebszustand der Windenergieanlage so zu erfassen bzw. zu überwachen, dass die Windenergieanlage in einem möglichst optimalen Arbeitspunkt betrieben werden kann bzw. dass Störungen an der Windenergieanlage frühzeitig erkannt werden.

Üblicherweise verwenden moderne Windenergieanlagen hierzu eine Vielzahl von Überwachungseinrichtungen, die insbesondere an den neuralgischen Punkten der Windenergieanlage angeordnet sind, um den Zustand einzelner Betriebsmittel zu überwachen.

US2014193257 offenbart ein akustisches Geräuschüberwachungssystem in Windkraftanlagen, bei dem Hintergrundgeräusche während Stillstandsbedingungen gemessen werden.

EP2565444 bezieht sich auf ein Verfahren und ein System zur Überwachung der Vereisungsbedingungen an Windturbinenblättern basierend auf Vibrations- und Geräuschmessungen.

Aus der Offenlegungsschrift WO 02/053910 A1, beispielsweise, ist eine Einrichtung zur Überwachung der Rotorblätter bekannt, die innerhalb der Rotorblätter angeordnet ist.

Nachteilig hierbei ist insbesondere, dass zur Überwachung weiterer Betriebsmittel, wie beispielsweise in der Gondel, weitere Überwachungseinrichtungen benötigt werden.

Ferner kommt hinzu, dass solche Überwachungs-Einrichtungen, wie in WO 02/053910 A1 gezeigt, nur unter hohem Aufwand in bereits bestehenden Windenergieanlagen nachgerüstet werden können.

Aufgabe der vorliegenden Erfindung ist es daher, wenigstens eines der vorgenannten Probleme zu adressieren. Insbesondere soll der bekannte Stand der Technik verbessert werden und ein Verfahren vorgeschlagen werden, das eine einfache Überwachung des Betriebszustandes der Windenergieanlage ermöglicht und/oder es soll ein kostengünstiges und redundantes Verfahren vorgeschlagen werden, welches auf einfache Weise auf bereits bestehenden Windenergieanlagen nachgerüstet werden kann. Zumindest soll eine zu bisher bekannten Lösungen alternative Lösung vorgeschlagen werden.

Das Deutsche Patent- und Markenamt hat in der Prioritätsanmeldung zu vorliegender Anmeldung den folgenden Stand der Technik recherchiert: DE 10 2008 026 842 B3, US 2009/0169378 A1, US 2009/0039650 A1 und US 2013/0268154 A1.

Erfindungsgemäß wird ein Verfahren nach Anspruch 1 vorgeschlagen.

Es wird somit ein Verfahren zur Überwachung einer Windenergieanlage mit einer Gondel vorgeschlagen, demnach mittels eines außerhalb und an der Gondel angeordneten akustischen Sensors ein Geräusch aufgenommen wird, welches anschließend zur Erkennung eines Betriebszustandes der Windenergieanlage ausgewertet wird.

Der akustische Sensor, der auch als Mikrofon bezeichnet werden kann, ist dabei so außerhalb und an der Gondel angeordnet, dass er wenigstens teilweise die Betriebsgeräusche der Windenergieanlage erfasst.

Als Betriebsgeräusche werden hierbei im Wesentlichen die Geräusche verstanden, die durch die einzelnen Betriebsmittel der Windenergieanlage verursacht werden. Dazu gehört beispielsweise das Brummen des Generators oder ein Geräusch, das beim Strömungsabriss an den Rotorblättern entsteht. Vorzugsweise nimmt der akustische Sensor aber zunächst alle Geräusche auf, um dann bestimmte Geräusche weiter auszuwerten.

Es wurde erfindungsgemäß erkannt, dass über eine Geräuschauswertung recht viele Zustände und Eigenschaften erkannt werden können. Bspw. kommt es nämlich je nach Windrichtung und Pitchwinkel zu einem aerodynamisch unterschiedlichen Ablöseverhalten der Windströmung am Rotorblatt, was bestimmte, akustisch messbare Geräusche zur Folge hat. Dabei können durch die Anordnung des Geräuschsensors außerhalb der Gondel besonders solche Zustände erfasst werden, die ansonsten weniger gut zu erfassen sind. Hierzu gehören eine Vereisung oder Verschmutzung der Rotorblätter, eine ungünstige Anströmung des Windes und etwaige Beschädigungen am Rotorblatt, beispielsweise durch Blitzschlag. Ebenso kann eine Erosion am Rotorblatt erkannt werden oder zumindest dazu im erfassten Geräusch ein Unterschied gegenüber einem Zustand ohne Erosion erkannt werden. Mit Hilfe des akustischen Sensors kann demnach wenigstens eine Rotorblattzustandsüberwachung durchgeführt werden und das vorgeschlagene Verfahren ist ferner dazu vorbereitet Eigenschaften des vorherrschenden Windes zu erfassen.

Das aufgenommene Geräusch wird dann so ausgewertet, dass auf den Betriebszustand der Windenergieanlage und/oder auf Wetterbedingungen zurückgeschlossen werden kann. Hierbei ist es vorteilhaft, das aufgenommene Geräusch in einem ersten Schritt zu filtern, um etwaige Störgeräusche zu eliminieren, die beispielsweise durch andere Windenergieanlagen oder die Umgebung entstehen.

Anschließend kann das Geräusch mittels einer erweiterter Schallanalyse bzw. Spektralanalyse ausgewertet, insbesondere mit bekannten Geräuschen bzw. Spektren bekannter Geräusche abgeglichen, werden.

Dadurch ist das erfindungsgemäße Verfahren wenigstens dazu vorbereitet Stalleffekte und shear-Effekte zu erfassen, den Schallleistungspegel der Windenergieanlage zu vermessen, den Zustand der Rotorblätter zu überwachen und auf Grund von aerodynamischen Ablösegeräuschen die Pitchregelung zu optimieren. Solche Zustände oder Zustandsänderungen können z.T. über die Art und/oder über die Lautstärke und den Ort des aufgenommenen Signals erkannt oder identifiziert werden. In Einigen Fällen, wie z.B. für die Erkennung eines Shear-Effekts kann auch eine Richtungssensitivität zur Identifikation hilfreich sein.

Vorzugsweise ist der akustische Sensor auf der Gondel der Windenergieanlage angeordnet, insbesondere auf dem höchsten Punkt der Gondel. Es können auch mehrere Sensoren verwendet werden, bzw. als Sensor mehrere Mikrofone verwendet werden. Auch die Verwendung eines Arrays von Mikrofonen kommt in Betracht und wird als eine bevorzugte Ausführungsform vorgeschlagen. Durch die Verwendung mehrerer Mikrofone, insbesondere durch die Verwendung eines Arrays aus Mikrofonen können besonders richtungssensitive Funktionen ausgeführt werden. Es lässt sich auch eine Redundanz erreichen, so dass dann bei Ausfall eines Mikrofons das Verfahren im Wesentlichen weiter arbeiten kann.

Durch ein Anordnen des akustischen Sensors auf der Gondel, also oberhalb der breitesten Stelle der Gondel, weist der Sensor eine besonders günstige Position auf, um die gesamte Windenergieanlage akustisch zu erfassen.

Insbesondere eignet sich diese Position, um gleichzeitig verschiedene Betriebszustände einzelner Betriebsmittel zu erfassen, wie beispielsweise der Gondel und der Rotorblätter. Zur Erfassung der Rotorblätter ist es ferner vorteilhaft, den Sensor auf dem höchsten Punkt der Gondel so anzuordnen, dass die Entfernung zu anderen Betriebsmitteln der Windenergieanlage möglichst groß ist, insbesondere um den Einfluss der Strömungsabrisse der anderen Betriebsmittel so zu minimieren, dass eine höhere Messgenauigkeit zum Erfassen der Strömungsabrisse der Rotorblätter erreicht wird.

Unter einem Strömungsabriss wird hierbei im Wesentlichen die Ablösung der Strömung, insbesondere der laminaren Strömung, von der Oberfläche des vom Wind angeströmten Betriebsmittels, insbesondere des Rotorblattes, verstanden, wobei der Strömungsabriss auch als *Stall* bzw. *Stalleffekt* bezeichnet werden kann.

Das vorliegende Verfahren umfasst also wenigstens eine Rotorblattzustandsüberwachung mit Hilfe derer eine Windenergieanlage auch gesteuert werden kann.

Vorzugsweise wird zur Erkennung des Betriebszustandes ein Schallleistungspegel der Windenergieanlage aufgenommen bzw. ausgewertet.

Als Schallleistungspegel ist hierbei die Schall-Immission zu verstehen, wie sie von dem wenigstens einen Geräuschsensor aufgenommen wird. Sie hat ihre Ursache in der Windenergieanlage, die sie aktiv verursacht, also beispielsweise durch die Rotorblätter, den Generator, die Azimut-Verstellung oder andere Komponenten.

Demnach setzt sich der Schallleistungspegel der Windenergieanlage aus der Gesamtheit aller an der Gondel erfassbaren und durch die Windenergieanlage verursachten Betriebsgeräusche zusammen. Der akustische Sensor ist also dazu vorbereitet, wenigstens diese Betriebsmittel akustisch zu erfassen.

Hierzu ist der akustische Sensor beispielsweise als hoch-sensibles Mikrofon ausgebildet.

Vorzugsweise erfolgt die Aufnahme des Geräusches richtungssensitiv.

Hierfür kann beispielsweise der Sensor mehrere Aufnahmesektoren aufweisen, wobei einzelne Sektoren zu- und/oder abgeschaltet werden können. Hierdurch kann das aufgenommene Geräusch in mehrere Teilgeräusche so zerlegt werden, dass jedem Teilgeräusch eine Richtung zugewiesen werden kann.

Demnach kann auf einfache Art und Weise die Richtung der Geräusche bestimmt werden und/oder die Aufnahme und/oder Auswertung in einer ersten Filterstufe gefiltert werden.

Besonders vorteilhaft hierbei ist, dass etwaige Geräuschüberlagerungen und/oder daraus resultierende Fehler gezielt minimiert werden können, um die Qualität der Aufnahme und/oder Auswertung zu verbessern. Durch die richtungsabhängige Aufnahme kann ggf. auch besser auf ein Geräusch lokalisiert werden.

In einer besonders vorteilhaften Ausführungsform weist der Sensor ferner eine Richtcharakteristik auf, die dazu vorbereitet ist, im Wesentlich nur die Betriebsgeräusche der Windenergieanlage zu erfassen. Also bestimmte Richtungen aus denen Störgeräusche kommen, nicht zu erfassen. Das Mikrofon weist also beispielsweise eine Kugel- oder eine Nierencharakteristik auf.

Vorzugsweise erfolgt das Aufnehmen des Geräusches in wenigstens einem Frequenzband, in dem Geräusche auftreten, die einer Eisbildung am Rotorblatt zuzuordnen sind.

Neben den aktiven Betriebsgeräuschen der Windenergieanlage, werden auch Betriebsgeräusche erfasst die nicht einzig durch die Windenergieanlage verursacht werden.

Dazu gehören Geräusche die beispielsweise durch Eisbildung am Rotorblatt hervorgerufen werden. Je nach Ausführungsform des Rotorblattes, führt die Eisbildung am Rotorblatt zu einer turbulenten Umströmung, die ein charakteristisches Geräusch erzeugt, welches in einem Frequenzband liegt, das von dem Sensor erfasst werden kann. Außerdem oder zusätzlich können auch Strömungsabrisse auftreten, die ebenfalls zu einem für sie charakteristischen Geräusch führen können.

Insbesondere können dadurch bestimmte Strömungsabrisse an der Windenergieanlage erfasst werden, die auf bestimmte Witterungsverhältnisse, wie beispielsweise Eisbildung, hinweisen.

Mit dem akustischen Sensor ist das Verfahren somit dazu vorbereitet das Wetter bzw. die vorherrschenden Witterungsbedingung indirekt zu erfassen.

Vorzugsweise erfolgt das Aufnehmen und/oder die Auswertung des Geräusches im Stillstand der Windenergieanlage.

Der Sensor bzw. die einen Sensor aufweisende Überwachungsvorrichtung wird somit auch im Stillstand der Windenergieanlage dazu verwendet, ein Geräusch zu erfassen. Dadurch kann auch ein redundantes Messsystem erreicht werden, wenn für die zu messende Größe ein weiterer Sensor vorhanden ist. Bspw. ist es bekannt, eine durch ein Anemometer erfasste Windgeschwindigkeit an Hand von Betriebsparametern wie abgegebene Leistung oder Blattstellung zu überprüfen. Das funktioniert aber nur im Betrieb der Anlage. Dadurch, dass das hier vorgeschlagene Verfahren aber auch im Stillstand einsetzbar ist, kann ein vollständig redundantes Windmesssystem erreicht werden.

Durch das Aufnehmen und/oder Auswerten des Geräusches im Stillstand der Windenergieanlage ist es ferner möglich den Betriebszustand der Windenergieanlagen zu erfassen, bevor die Windenergieanlage wieder angefahren wird. Dadurch kann auch erkannt werden, wenn sich Windbedingungen so ändern, dass die Windenergieanlage gestartet werden kann.

Im Stillstand können beispielsweise Geräusche durch Wind an den Rotorblättern, an der Gondel, an Gondelaufbauten oder auch am Turm entstehen und charakteristische Töne beinhalten können, die z.B. Aufschluss über Windgeschwindigkeit und Windrichtung geben können.

Vorzugsweise erfolgt das Auswerten des aufgenommenen Geräusches zur Erkennung des Betriebszustandes extern, insbesondere durch eine Überwachungsstelle.

Das Auswerten des aufgenommenen Geräusches, also das Auswerten des Schalleistungspegels der Windenergieanlage, erfolgt vorzugsweise in einer Warte oder Überwachungsstelle, die sich beispielsweise bei Bedarf auf das Mikrofon aufschaltet. Im Falle eines Aufschaltens der Warte auf das Mikrofon, wird das Geräusch also zur Warte übersandt. Dies kann beispielsweise mittels eines Senders und/oder über Internet erfolgen.

Der Anlagenbetreiber kann hierdurch die Windenergieanlage unabhängig ihres Betriebszustandes überwachen. Sofern er dann eine Beschädigung der Windenergieanlage feststellt, kann er das Wartungspersonal entsprechend auf die Reparaturarbeiten vorbereiten.

Besonders vorteilhaft hierbei ist, dass dem Wartungspersonal bei Eintreffen vor Ort der Fehler bereits bekannt ist, was zu deutlich kürzeren Montagezeiten führt.

Vorzugsweise erfolgt das Auswerten des aufgenommenen Geräusches zur Erkennung des Betriebszustandes mittels einer Spektralanalyse, insbesondere mittels einer Fast-Fourier-Transformation oder einer Schmalbandanalyse.

Das Auswerten des Geräusches erfolgt demnach mittels analytischer Verfahren mit denen das Geräusch in einzelne Frequenzbänder zerlegt wird.

Die Zerlegung in die Frequenzbänder erfolgt dabei vorzugsweise so, dass sie die entsprechenden und bekannten Frequenzbänder der Betriebsmittel aufweisen. Demnach können die durch das analytische Verfahren erzeugten Frequenzbänder auf eine einfache und zweckmäßige Weise mit bereits bekannten Frequenzbändern abgeglichen werden. Solche bekannten Frequenzbänder können vorab ausgemessen und entsprechend hinterlegt werden. Jeder Anlagenzustand kann dadurch seinen eigenen, individuellen "Fingerabdruck" haben.

Sofern sich der Rotor der Windenergieanlage beispielsweise mit einer Drehzahl von 12 Umdrehungen pro Minute dreht, was einer Frequenz von 0,2 Hz entspricht, kann bspw. ein Durchgang der Rotorblätter am Turm mit einer Frequenz von 3*0,2 Hz auftreten, wenn drei Rotorblätter vorhanden sind. Etwaige niedrigere oder höhere Frequenzen, die von diesen beispielhaften 3*0,2Hz abweichen, könnten darauf hinweisen, dass die Windenergieanlage sich nicht im optimalen Arbeitspunkt befindet und die Anlage entsprechend geregelt werden muss.

Als Analyseverfahren kann neben der Spektralanalyse, auch eine Fast-FourierTransformation, eine Schmalbandanalyse oder eine inkohärente Demodulation, beispielsweise mittels Hüllkurven, gewählt werden, wobei die Auflösung des Verfahrens so zu wählen ist, dass entsprechend zwischen den verschiedenen Frequenzbändern der Betriebsmitteln unterschieden werden kann. Aber auch andere Amplituden-Modulationsverfahren, die dem Fachmann geläufig sind, können hierfür verwendet werden.

Vorzugsweise wird ein Verfahren zum Steuern eines Betriebes wenigstens einer Windenergieanlage vorgeschlagen, demnach ein Geräusch einer Windenergieanlage mittels eines außerhalb und an einer Gondel einer Windenergieanlage angeordneten akustischen Sensors aufgenommen wird, das aufgenommene Geräusch zur Erkennung eines Betriebszustandes der den akustischen Sensor umfassenden Windenergieanlage ausgewertet und der Betrieb einer Windenergieanlage in Abhängigkeit des Betriebszustandes der den akustischen Sensor umfassenden Windenergieanlage gesteuert wird.

Der Betrieb einer Windenergieanlage, insbesondere der den akustischen Sensor umfassenden Windenergieanlage, wird demnach in Abhängigkeit eines aufgenommenen Geräusches gesteuert, wobei weitere Eingangsgrößen berücksichtigt werden können. Bspw. wird bei einem zu hohen Geräuschpegel, insbesondere bei einem speziellen Geräuschpegel bzw. speziellem Amplitudenverlauf, die Pitchregelung so gesteuert, dass der Geräuschpegel der Windenergieanlage reduziert wird. Auch kann die Windenergieanlage bei einem ungünstigen bzw. zu hohem Geräuschpegel abgeschaltet werden, der auf eine schwerwiegende Störung hinweist, die zu weiteren Beschädigungen an der Windenergieanlage führen kann.

Das aufgenommene Geräusch umfasst hierbei wenigstens ein Geräusch eines Betriebsmittels einer Windenergieanlage. Demnach ist der akustische Sensor dazu vorbereitet für Windenergieanlagen spezifische Geräusche, insbesondere Frequenzbänder der Betriebsmittel, wie bspw. ein Pitchantrieb, zu erfassen. Es können aber auch spezielle Charakteristika erfasst werden, die bspw. zu bestimmten Frequenzen bestimmte Amplituden und/oder eine bestimmte Amplitudenverteilung aufweisen.

Das vorgeschlagene Verfahren zum Steuern der Windenergieanlage kann dadurch als redundantes Verfahren zum Steuern einer Windenergieanlage ausgebildet sein, da es das gemäß wenigstens einer Ausführungsform beschriebe Überwachungsverfahren als redundantes Verfahren verwendet. Durch Verwendung eines solchen Überwachungsverfahrens kann auch eine Optimierung der Anlagensteuerung erreicht werden, besonders dadurch, dass die Ergebnisse dieser Überwachung als zusätzliche Messwerte zur Redundanz, zur Überprüfung oder als Ergänzung, um eine größere Messdatenbasis zu schaffen, einfließen. Insbesondere wird vorgeschlagen, dadurch den Ertrag von Windenergieanlagen zu optimieren.

Ferner wird gemäß einer Ausgestaltung vorgeschlagen, die Windenergieanlage mittels des vorliegenden Verfahrens beim Erkennen eines fehlerhaften Betriebszustandes zu drosseln oder herunterzufahren.

In einer bevorzugten Ausführungsform wird mittels dieses Verfahrens eine zweite Windenergieanlage gesteuert. Insbesondere wird beim Feststellen von Beschädigungen die beschädigte Windenergieanlage gedrosselt und wenigstens eine zweite Windenergieanlage der der Drosselung entsprechenden Leistung hochgefahren.

Vorzugsweise wird in Abhängigkeit des aufgenommenen Geräusches wenigstens ein Zustand gesteuert aus der Liste bestehend aus:
- wenigstens einem Pitchwinkel eines Rotorblattes,
- einem Azimut-Winkel,
- einer Nennleistung und
- einer Nenndrehzahl einer Windenergieanlage.

Demnach wird beispielsweise zur Ertragsoptimierung ein Pitchwinkel eines Rotorblattes oder der Azimut-Winkel einer Windenergieanlage in Abhängigkeit des aufgenommenen Geräusches gesteuert. Die Windenergieanlage wird also, um den Ertrag zu optimieren, beispielsweise in Abhängigkeit des erfassten Strömungsabrisses am Rotorblatt im Wind ausgerichtet.

Ferner kann das Verfahren auch dazu verwendet werden, den Schallleistungspegel der Windenergieanlage so zu regeln, dass unter Einhaltung von Garantiewerten, insbesondere Immissionsbestimmungen, der maximal mögliche Schallleistungspegel gefahren wird, um so den Ertrag der Windenergieanlage zu maximieren.

Vorzugsweise stellt der an der Gondel angeordnete akustische Sensor das aufgenommene Geräusch auf eine externe Anfrage hin, insbesondere an eine die Anfrage gestellte Einheit, bereit.

Der akustische Sensor ist also dazu vorbereitet, das aufgenommene Geräusch an eine externe Einheit weiterzugeben, beispielsweise per Internetübertragung. Unter externen Einheiten sind insbesondere Leitwarten oder Überwachungsstellen zu verstehen, die der Steuerung von Windenergieanlagen und/oder Windparks dienen.

Bspw. kann sich ein technischer Innendienst online auf das Mikrofon schalten bzw. Schallmitschnitte anhören und sich so einen direkten Eindruck von den Schallimmissionen machen ohne zur Anlage zufahren.

Besonders vorteilhaft bei einer externen Auswertung des Geräusches ist, dass die Warte bzw. der technische Innendienst sich auch im Stillstand oder Blackout der Windenergieanlage auf den akustischen Sensor aufschalten kann, um so den Betriebszustand der Windenergieanlage zu überprüfen.

Vorzugsweise ist der akustische Sensor autark ausgeführt und/oder die Windenergieanlage wird von extern in Abhängigkeit des aufgenommenen Geräusches gesteuert.

Es wird also vorgeschlagen den Sensor so auszuführen, dass er lediglich mechanisch an der Windenergieanlage befestigt ist. Demnach verfügt der akustische Sensor wenigstens über eine eigene Stromversorgung und eine Datenschnittstelle, um das aufgenommene Geräusch an eine Warte zu übertragen, insbesondere zu streamen.

Der Sensor ist also Teil einer Überwachungsvorrichtung, die ein abgeschlossenes Modul bildet, welches einfach auf einer Windenergieanlage nachgerüstet werden kann.

Ferner wird vorgeschlagen, die Windenergieanlage extern, also beispielsweise durch eine Warte, zu steuern.

Der akustische Sensor ist demnach nicht direkt mit der Steuerung der Windenergieanlage verbunden. Die Daten werden zuerst zu einer Warte bzw. Leitwarte geschickt und dort ausgewertet. Anschließend kann dann die Warte die den Sensor aufweisende Windenergieanlage in Abhängigkeit des aufgenommenen Geräusches anfahren, insbesondere kann die Warte die den Sensor aufweisende Windenergieanlage in Abhängigkeit des aufgenommenen Geräusches steuern.

Besonders vorteilhaft hierbei ist, dass das vorgeschlagene Verfahren sowohl eine redundante Messung als auch eine überlagerte Regelung der Windenergieanlage ermöglicht. Der Betreiber der Windenergieanlage kann somit durch eine autarke Messung in den Betrieb der Windenergieanlage eingreifen. Dies ist besonders wünschenswert, wenn die Windenergieanlage interne Steuerfehler aufweist, beispielsweise durch ein defektes Anemoskop, welches eine falsche Windrichtung wiedergibt. In solchen Fällen steht dann nämlich die Windenergieanlage schief im Wind, was eine beträchtliche Ertragsminimierung zur Folge hat.

Vorzugsweise wird zur Steuerung der Windenergieanlage ein Verfahren zur Überwachung gemäß wenigstens einer vorstehend beschriebenen Ausführungsformen verwendet.

Das Verfahren zur Steuerung der Windenergieanlage umfasst also wenigstens einen der oben beschriebenen Schritte zur Überwachung einer Windenergieanlage.

Vorzugsweise wird eine Überwachungsvorrichtung zur Überwachung einer Windenergieanlage mit einer Gondel vorgeschlagen, wobei die Überwachungsvorrichtung einen außerhalb und an der Gondel angeordneten akustischen Sensor zum Aufnehmen eines Geräusches, und eine Auswerteeinrichtung zum Auswerten des aufgenommenen Geräusches zur Erkennung eines Betriebszustandes der Windenergieanlage umfasst. Hierzu wird vorgeschlagen, dass der Sensor witterungsbeständig ist, insbesondere Wind, Regen und anderen Niederschlägen ausgesetzt werden kann.

Die Überwachungsvorrichtung ist demnach für eine Installation auf einer Windenergieanlage vorbereitet und weist wenigstens einen akustischen Sensor auf, der ein Betriebs-Geräuschspektrum einer Windenergieanlage erfassen kann. Insbesondere kann der akustische Sensor dieses Geräuschspektrum sensitiv, beispielsweise richtungssensitiv erfassen.

Auch umfasst die Überwachungsvorrichtung einen Sender und/oder Empfänger, um das aufgenommene Geräusch an eine Warte zu übertragen und/oder das aufgenommene Geräusch mittels eines Speichers für einen späteren, externen Zugriff zur Verfügung zu stellen. Ferner weist die Überwachungsvorrichtung eine von der Windenergieanlage unabhängige Stromversorgung auf und ist dazu vorbereitet an der Gondel einer Windenergieanlage befestigt zu werden.

Vorzugsweise ist die Überwachungsvorrichtung dazu vorbereitet, eines der vorstehenden Verfahren auszuführen. Besonders wird vorgeschlagen, dass ein oder mehrere Verfahrensschritte eines Verfahrens gemäß wenigstens einer vorstehend beschriebenen Ausführungsform in einer Prozesssteuereinheit der Überwachungsvorrichtung implementiert ist.

Vorzugsweise weist die Überwachungsvorrichtung eine Datenschnittstelle auf, zum Austausch von Daten, insbesondere zum Übertragen von durch den akustischen Sensor aufgenommenen Daten und/oder zum Übertragen von durch die Auswerteeinrichtung ausgewerteten Daten. Der Austausch von Daten wird besonders zwischen der Prozesssteuereinheit der Überwachungsvorrichtung und externen Vorrichtungen, besonders Leitwarten, vorgeschlagen.

Auch wird eine Windenergieanlage mit einer Gondel und wenigstens einem außen an der Gondel angeordneten akustischen Sensor zum Aufnehmen von Geräuschen vorgeschlagen, wobei die Windenergieanlage eine Überwachungsvorrichtung gemäß wenigstens einer vorstehend beschriebenen Ausführungsform verwendet und/oder ein Verfahren gemäß wenigstens einer vorstehend beschriebenen Ausführungsform ausführt.

Ferner wird auch ein wenigstens zwei Windenergieanlagen umfassender Windpark vorgeschlagen, wobei wenigstens eine Windenergieanlage eine Überwachungsvorrichtung wie oben beschrieben aufweist und/oder dazu vorbereitet ist wenigstens einen der oben beschrieben Verfahrensschrift durchzuführen.

Vorzugsweise wird vorgeschlagen, die Windenergieanlagen des Windparks zum Austausch der aufgenommenen Geräusche und/oder der ausgewerteten Geräusche zu vernetzen, insbesondere um die Windenergieanlagen in Abhängigkeit eines aufgenommenen Geräusches zu steuern.

Demnach wird vorgeschlagen ein Windpark in Anhängigkeit eines aufgenommenen Geräusches zu steuern.

Am Geräusch kann erkannt werden, ob Eisansatz vorliegt, weil das Eis das Geräuschspektrum verändert. Besonders die Rotorblätter geben ein anderes Geräusch ab, wenn sie Eis aufweisen, wobei sich die Geräusche unterscheiden, ob, wie und wie schnell sich die Blätter bewegen und ggf. welcher Blattwinkel eingestellt ist. Auch im Stillstand entsteht ein Geräusch, sobald etwas Wind weht, das durch Eisansatz verändert wird. Ggf. kommen Geräusche von abfallendem Eis hinzu. Es können auch über die Lände des Blattes unterschiedliche Geräusche erzeugt werden und daraus kann versucht werden, auf die Position des Eises zu schließen.

Auch bei Verschmutzungen oder Beschädigungen des Rotorblattes verändern diese das Geräusch, das von den Blättern ausgeht. Auch hier hat die Position der auf dem Blatt einen Einfluss auf das Geräusch.

Bspw. kann einem sauberen, eisfreien und unbeschädigten Rotorblatt ein Geräuschspektrum zugeordnet werden. Ist dieses Geräuschspektrum wie gewohnt, also wie zuvor aufgenommen, sollte mit dem betreffenden Rotorblatt alles in Ordnung. Treten Unterschiede auf, fehlt nämlich etwas, muss es eine Veränderung am Blatt gegeben haben, die evtl. auch noch genauer zugeordnet werden kann, sowohl nach Ort als auch nach Art. Fehlt aber in dem gewohnten Geräuschspektrum nichts, ist aber etwas hinzugekommen, könnte das bedeuten, dass das Blatt unverändert ist und das Zusätzliche eine andere Ursache hat.

Die vorliegende Erfindung wird nun nachfolgend exemplarisch anhand von Ausführungsbeispielen unter Bezugnahme auf die begleitenden Figuren näher erläutert.
- Fig. 1: zeigt eine schematische Darstellung einer Windenergieanlage
- Fig. 2a: zeigt eine schematische Darstellung der Windenergieanlage in einer Drauf-sicht
- Fig. 2b: zeigt die schematische Darstellung der Windenergieanlage in einer Drauf-sicht gemäß Fig. 2a, wobei die Windenergieanlage eine Eisbildung am Rotorblatt aufweist
- Fig. 3: zeigt ein Schema eines Verfahrens zum Überwachen einer Windenergieanlage gemäß einer Ausführungsform
- Fig. 4: zeigt ein Schema eines Verfahrens zum Steuern einer Windenergieanlage gemäß einer Ausführungsform
- Fig. 5: zeigt eine schematische Darstellung einer Spektralanalyse

Fig. 1 zeigt eine Windenergieanlage 100 mit einem Turm 102 und einer Gondel. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Außerhalb und an der Gondel ist ein akustischer Sensor 114 angeordnet, alternativ können bspw. auch zwei akustische Sensoren 114 vorgesehen sein.

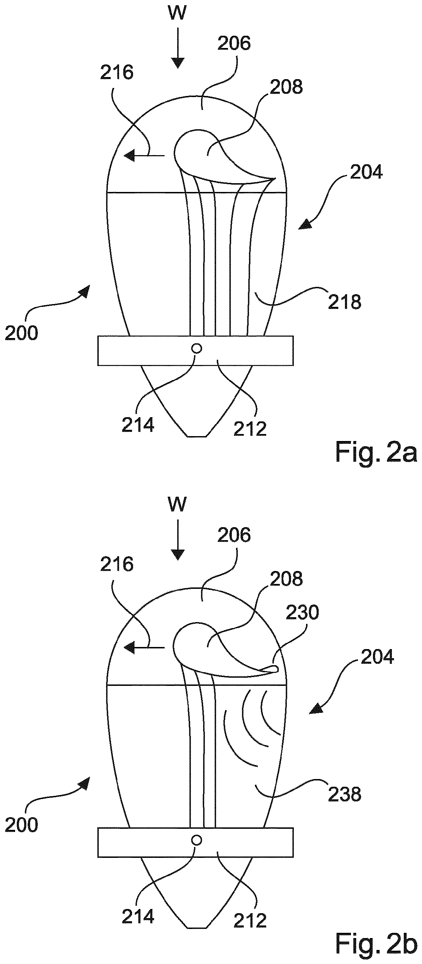

Fig. 2a zeigt eine Windenergieanlage 200 gemäß Fig. 1 in einer Draufsicht, wobei der an der Gondel 204 drehbar befestigte Rotor 206 zur Veranschaulichung nur eines der drei Rotorblätter 208 in einer 12-Uhr-Stellung aufweist. Fermer ist oberhalb und an der Gondel 204 ein Instrumententräger 212 befestigt, der einen akustischen Sensor 214, insbesondere eine erfindungsgemäße Überwachungsvorrichtung 214, aufweist.

Das Rotorblatt 208 ist zusammen mit dem Rotor 206 drehbar zum Rest der Gondel 204 angeordnet. Durch den Wind W dreht sich das Rotorblatt 208 in die durch den Pfeil gekennzeichnet Drehrichtung 216. Das Rotorblatt 208 verursacht dabei einen Strömungsabriss 218, der aus der Windrichtung W gesehen, hintern dem Rotorblatt 208 liegt. Es wird darauf hingewiesen, dass die Darstellung schematisch ist und besonders den Strömungsabriss nur schematisch darstellt.

Der hier somit nur vereinfacht dargestellte laminare Strömungsabriss 218 ist in Form eines Geräusches messbar und wird durch den akustischen Sensor 214, der als Mikrofon ausgebildet ist, erfasst. Je nach Anstellwinkel und Position des Rotorblattes 208 zum Wind W kann der Strömungsabriss 220 variieren.

Bspw. erfolgt die Ablösung der laminaren Strömung an einem anderen Punkt der Rotorblattoberfläche oder die laminare Strömung schlägt am Rotorblatt zu einer turbulenten Strömung um. Solche und weitere Veränderungen im Strömungsabriss, die insbesondere durch den Pitchwinkel verursacht werden, können erfindungsgemäß durch den akustischen Sensor erfasst und ausgewertet werden.

Fig. 2b, die im Wesentlich Fig. 2a entspricht, zeigt dieselbe Darstellung einer Windenergieanlage 200 gemäß Fig. 1, wobei das Rotorblatt 208 eine Vereisung 230 aufweist, die auch als Eisbildung 230 bezeichnet werden kann.

Die Eisbildung 230 verursacht, im Gegensatz zu einem eisfreien Rotorblatt 208, einen veränderten Strömungsabriss 238, der ebenfalls nur vereinfacht dargestellt ist. Dieser veränderte Strömungsabriss 238 ist ebenfalls in Form eines Geräusches messbar und wird durch das Mikrofon 214 erfasst. Das so aufgenommene Geräusch weicht von einem Geräusch eines eisfreien Rotorblattes erkennbar ab, so dass die Eisbildung 230 am Rotorblatt 208 durch einen einfachen Abgleich erkannt wird.

Sowohl Fig. 2a als auch Fig. 2b zeigen nur ein Beispiel zur Erfassung eines Betriebszustandes eines Betriebsmittels einer Windenergieanlage. Der akustische Sensor und die vorgeschlagenen Verfahren sind auch zur Erfassung weiterer Betriebszustände anderer Betriebsmitteln geeignet, wie bspw. dem Generator und der Gondel. Die Erfassung weiterer Betriebszustände kann demnach durch dasselbe aufgenommene Geräusch zeitgleich erfolgen.

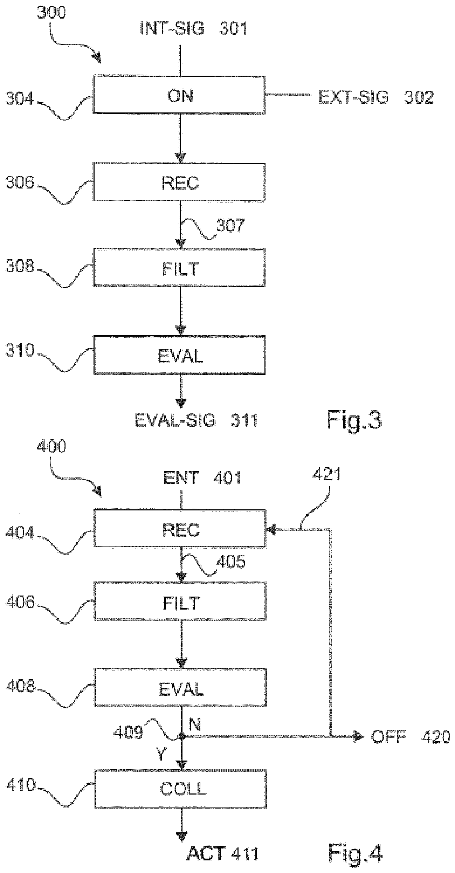

Fig. 3 veranschaulicht in einer Übersicht 300 ein Verfahren zum Überwachen einer Windenergieanlage gemäß einer bevorzugten Ausführungsform, wobei die Windenergieanlage zum Überwachen eines Betriebszustandes der Windenergieanlage einen akustischen Sensor außerhalb und an, insbesondere auf, der Gondel aufweist.

Der akustische Sensor wird auf ein Signal hin eingeschaltet, wobei als Signal ein internes Signal der Windenergieanlage 301 oder ein externes Signal der Warte 302 verwendet wird. Nach dem Einschalten 304 beginnt der akustische Sensor, also das Mikrofon, mit der Aufnahme des Geräusches 306, das die Gondel der Windenergieanlage umgibt. Die Aufnahme 306 wird anschließend an einen Filter übergeben 307, um Störsignale in der Aufnahme zu eliminieren. Das Filtern 308 erfolgt entweder intern, nämlich insbesondere in der den Sensor aufweisenden Überwachungsvorrichtung. Die Überwachungsvorrichtung umfasst wenigstens einen Sensor und kann ferner auch einen Filter und eine Auswerteeinheit umfassen. Alternativ kann das Filtern extern in einer Warte erfolgen. Zum externen Filtern wird das aufgenommene Geräusch dann beispielsweise via W-LAN an die Warte mittels eines Streams übertragen.

Nach dem Filtern 308 wird das Geräusch ausgewertet. Zum Auswerten 310 wird beispielsweise eine Spektralanalyse durchgeführt, bei der das aufgenommene und gefilterte Geräusch in einzelne Frequenzbänder zerlegt wird. Diese Frequenzbänder können dann mit bekannten Frequenzbändern abgeglichen werden. Im Falle einer Abweichung zwischen diesen Frequenzbändern, würde dann ein Störungssignal 311 ausgegeben werden, welches weiter verarbeitet wird.

Das Störungssignal 311 kann beispielsweise durch ein Warnsignal in der Warte realisiert werden, wobei das Personal in der Warte dann weitere Schritte einleiten kann, um die Störung zu beheben.

Fig. 4 veranschaulicht in einer Übersicht 400 ein Verfahren zum Steuern eine Windenergieanlage gemäß einer bevorzugten Ausführungsform, wobei die Windenergieanlage zum Steuern einen akustischen Sensor auf der Gondel aufweist und ein zuvor beschriebenes Verfahren zum Überwachen einer Windenergieanlage umfasst, und wobei die Windenergieanlage von extern in Abhängigkeit des aufgenommenen Geräusches gesteuert wird.

Eine Warte, also eine externe Überwachungsstelle, schaltet sich hierzu auf eine auf der Windenergieanlage befindliche Überwachungsvorrichtung auf 401, wobei die Überwachungsvorrichtung einen akustischen Sensor umfasst, der auf der Gondel der Windenergieanlage angeordnet ist.

Der akustische Sensor, der als Mikrofon ausgeführt ist, nimmt das die Gondel umgebende Geräusch auf, und übersendet dies an die Warte. Die Aufnahme 404 wird also an die Warte übertragen 405.

Dort wird das Geräusch gefiltert 406 und anschließend, beispielsweise durch eine Spektralanalyse, ausgewertet 408.

Die Auswertung 408 stellt fest ob es eine Störung eines Betriebsmittels der Windenergieanlage vorliegt 409. Wenn keine Störung vorliegt, kann die Warte sich entweder vom Sensor abschalten 420 oder weiter das Geräusch übertragen 421. Sofern eine Störung vorliegt, erfolgt ein Abgleich mit einer Reglungsdatenbank, die mit Hilfe einer Datenbank, die günstigste Steuergröße zum Steuern der Windenergieanlage errechnet. Mittels dieser Steuergröße 411 wird dann das entsprechende Betriebsmittel angesteuert.

Im einfachsten Fall stellt die Warte einen falschen Strömungsabriss an der Windenergieanlage fest und steuert den Azimut-Winkel der Gondel dann entsprechend. In einem anderen beispielhaften Fall, befindet sich die Windenergieanlage im Stillstand und die Warte schaltet sich vor dem Anfahren der Anlage auf das Mikrofon. Hierbei stellt die Warte eine Vereisung an den Rotorblättern fest und entscheidet sich in einem Abgleich 410 entweder die Blätter mittels einer Heizung zu enteisen oder die Anlage noch nicht Anzufahren.

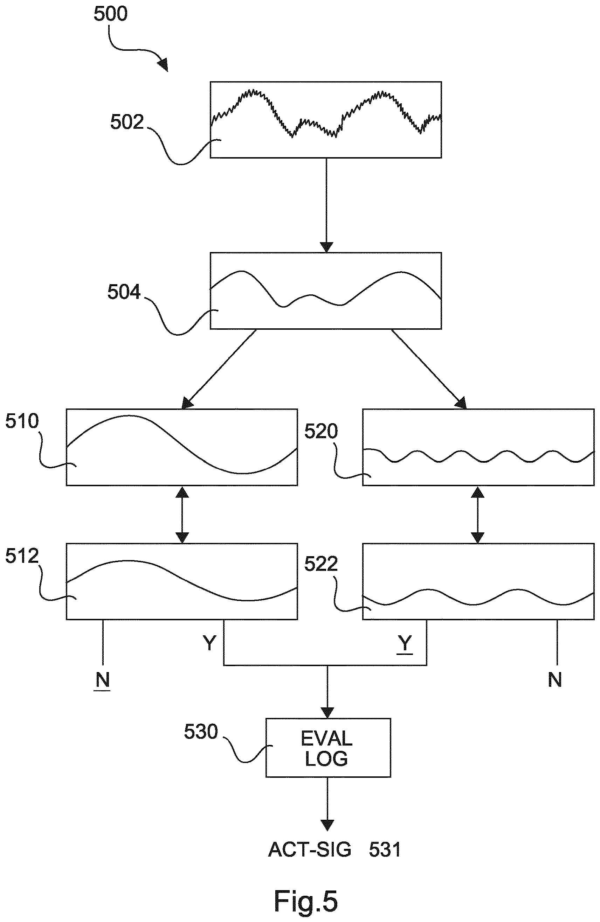

Fig. 5 zeigt schematische eine Auswertung, insbesondere eine Spektralanalyse, eines aufgenommenen Geräusches 500.

Demnach wird zuerst ein die Gondel der Windenergieanlage umgebendes Geräusch 502 mittels eines auf der Gondel der Windenergieanlage angeordnetem Mikrofon aufgenommen.

Das so aufgenommene Geräusch wird anschließend zu einem im Wesentlichen störungsfreien Geräusch 504 gefiltert. Dies kann beispielsweise durch Hoch- und/oder Tiefpassfilter erfolgen.

Anschließend wird das gefilterte Geräusch mittels einer Spektralanalyse in bestimmte Frequenzbänder 510 und 520 zerlegt. Die Zerlegung in zwei Frequenzbänder soll nur vereinfachend das Prinzip widergeben, die Auswertung ist nicht auf so eine Zerlegung in zwei Bänder beschränkt.

Die bestimmten Frequenzbänder 510 und 520 werden mit den bekannten Frequenzbändern 512 und 522 abgeglichen. Das Frequenzband 510 entspricht beispielhaft dem Frequenzband 510 des aufgenommenen Geräusches der Rotorblätter und das Frequenzband 520 dem Frequenzband 520 des aufgenommenen Geräusches der Azimut-Verstellung. Diese werden mit den für die Rotorblätter und die Azimut-Verstellung bekannten Frequenzbändern 512 und 522 abgeglichen. Die bekannten Frequenzbänder können beispielsweise ab Werk durch Simulation oder Messung vor Ort ermittelt werden. Aber auch eine iterative Bestimmung der bekannten Frequenzbänder 512 und 522 im laufenden Betrieb der Windenergieanlage ist möglich.

Sofern bei diesem Abgleich der Frequenzbänder eine Abweichung ermittelt wird, wird diese an eine Auswertelogik 530 übergeben, die dann potentielle Steuervorgänge untereinander abgleicht und eine bevorzugtes Steuersignal 531 ausgibt.

In Fig. 5, ist ein Beispiel gezeigt, und dort weist das aufgenommene Frequenzband 520 der Azimut-Verstellung eine Abweichung zu dem bekannten Frequenzband 522 der Azimut-Verstellung auf. Diese Abweichung wird nun an die Auswertelogik 530 übergeben, die ein bevorzugtes Steuersignal 531 auslöst. Beispielsweise wird der Anstellwinkel der Rotorblätter verändert, um die festgestellte Abweichung zu beheben.

## Patentansprüche

1. Verfahren zur Überwachung einer Windenergieanlage mit einer Gondel, umfassend die Schritte:
- Aufnehmen eines Geräusches mittels wenigstens eines außerhalb und an der Gondel angeordneten akustischen Sensors,
- Auswerten des aufgenommenen Geräusches zur Erkennung eines Rotorblattzustandes der Windenergieanlage, wobei
- das Aufnehmen und die Auswertung des Geräusches im Stillstand der Windenergieanlage erfolgt.

2. Verfahren nach Anspruch 1, **dadurch gekennzeichnet, dass** der akustische Sensor auf der Gondel angeordnet ist.

3. Verfahren nach einem der Ansprüche 1 oder 2, **dadurch gekennzeichnet, dass** zur Erkennung des Betriebszustandes ein Schallleistungspegel der Windenergieanlage aufgenommen wird.

4. Verfahren nach einem der vorstehenden Ansprüche, **dadurch gekennzeichnet, dass** die Aufnahme des Geräusches richtungssensitiv erfolgt.

5. Verfahren nach einem der vorstehenden Ansprüche, **dadurch gekennzeichnet, dass** das Aufnehmen des Geräusches in wenigstens einem Frequenzband erfolgt, in dem Geräusche auftreten, die einer Eisbildung am Rotorblatt zuzuordnen sind.

6. Verfahren nach einem der vorstehenden Ansprüche, **dadurch gekennzeichnet, dass** das Auswerten des aufgenommenen Geräusches zur Erkennung des Betriebszustandes extern, insbesondere durch eine Überwachungsstelle, erfolgt.

7. Verfahren nach einem der vorstehenden Ansprüche, **dadurch gekennzeichnet, dass** das Auswerten des aufgenommenen Geräusches zur Erkennung des Betriebszustandes mittels einer Spektralanalyse erfolgt.

8. Überwachungsvorrichtung zur Überwachung einer Windenergieanlage mit einer Gondel, umfassend
- einen außerhalb und an der Gondel angeordneten akustischen Sensor zum Aufnehmen eines Geräusches, und
- eine Auswerteeinrichtung zum Auswerten des aufgenommenen Geräusches im Stillstand der zur Erkennung eines Betriebszustandes der Windenergieanlage, wobei
- die Auswerteeinrichtung dazu eingerichtet ist, um ein Verfahren nach einem der Ansprüche 1 bis 7 auszuführen.

9. Überwachungsvorrichtung nach Anspruch 8, **dadurch gekennzeichnet, dass** der akustische Sensor mehrere Mikrofone aufweist.

10. Überwachungsvorrichtung nach Anspruch 9, **dadurch gekennzeichnet, dass** der akustische Sensor ein Array aus Mikrofonen aufweist.

11. Überwachungsvorrichtung nach einem der Ansprüche 8 bis10, **dadurch gekennzeichnet, dass** eine Datenschnittstelle vorgesehen ist, zum Austausch von Daten.

12. Überwachungsvorrichtung nach Anspruch 11, **dadurch gekennzeichnet, dass** die Datenschnittstelle zum Übertragen von durch den akustischen Sensor aufgenommenen Daten und/oder zum Übertragen von durch die Auswerteeinrichtung ausgewerteten Daten vorgesehen ist.

13. Windenergieanlage mit einer Gondel und wenigstens einem außen an der Gondel angeordneten akustischen Sensor zum Aufnehmen von Geräuschen, **dadurch gekennzeichnet, dass**
- eine Überwachungsvorrichtung nach einem der Ansprüche 8 bis 12 verwendet wird und/oder dass
- ein Verfahren nach einem der Ansprüche 1 bis 7 ausgeführt wird.

14. Windpark, umfassend wenigstens zwei Windenergieanlagen, wobei wenigstens eine Windenergieanlage gemäß Anspruch 13 verwendet wird und/oder ein Verfahren nach einem der Ansprüche 1 bis 7 durchgeführt wird.

15. Windpark mit wenigstens zwei Windenergieanlagen, bei dem die Windenergieanlagen untereinander vernetzt sind und zum Austausch von Daten überwenigstens eine Überwachungsvorrichtung nach einem der Ansprüche 8 bis 12 vorbereitet sind.

## Claims

1. A method for monitoring a wind power installation having a nacelle, comprising the steps of:
- recording a sound by means of at least one acoustic sensor arranged outside and on the nacelle,
- evaluating the recorded sound to detect a state of the rotor blade of the wind power installation, wherein
- the sound is recorded and evaluated when the wind power installation is at a standstill.

2. The method as claimed in claim 1, **characterized in that** the acoustic sensor is arranged atop the nacelle.

3. The method as claimed in either of claims 1 and 2, **characterized in that** the operating state is detected by virtue of a sound power level of the wind power installation being recorded.

4. The method as claimed in one of the preceding claims, **characterized in that** the sound is recorded in directionally sensitive fashion.

5. The method as claimed in one of the preceding claims, **characterized in that** the sound is recorded in at least one frequency band in which sounds occurthat are attributable to ice formation on the rotor blade.

6. The method as claimed in one of the preceding claims, **characterized in that** the evaluating of the recorded sound to detect the operating state is effected externally, in particular by a monitoring center.

7. The method as claimed in one of the preceding claims, **characterized in that** the evaluating of the recorded sound to detect the operating state is effected by means of a spectral analysis.

8. A monitoring apparatus for monitoring a wind power installation having a nacelle, comprising
- an acoustic sensor arranged outside and on the nacelle for recording a sound, and
- an evaluation device for evaluating the recorded sound at a standstill to detect an operating state of the wind power installation, wherein
- the evaluation device is adapted for carrying out a method as claimed in one of claims 1 to 7.

9. The monitoring apparatus as claimed in claim 8, **characterized in that** the acoustic sensor has multiple microphones.

10. The monitoring apparatus as claimed in claim 9, **characterized in that** the acoustic sensor has an array of microphones.

11. The monitoring apparatus as claimed in one of claims 8 to 10, **characterized in that** a data interface is provided, for interchanging data.

12. The monitoring apparatus as claimed in claim 11, **characterized in that** the data interface is provided, for transmitting data recorded by the acoustic sensor and/or for transmitting data evaluated by the evaluation device.

13. A wind power installation having a nacelle and at least one acoustic sensor arranged on the outside of the nacelle for recording sounds, **characterized in that**
- a monitoring apparatus as claimed in one of claims 8 to 12 is used and/or **in that**
- a method as claimed in one of claims 1 to 7 is carried out.

14. A wind farm, comprising at least two wind power installations, wherein at least one wind power installation as claimed in claim 13 is used and/or a method as claimed in one of claims 1 to 7 is performed.

15. A wind farm having at least two wind power installations, in which the wind power installations are networked among one another and are prepared for interchanging data via at least one monitoring apparatus as claimed in one of claims 8 to 12.

## Revendications

1. Procédé pour surveiller une éolienne avec une nacelle, comprenant les étapes :
- d'enregistrement d'un bruit au moyen d'au moins un capteur acoustique disposé à l'extérieur et au niveau de la nacelle,
- d'évaluation du bruit enregistré pour identifier un état de pale de rotor de l'éolienne, dans lequel
- l'enregistrement et l'évaluation du bruit sont effectués lorsque l'éolienne est à l'arrêt.

2. Procédé selon la revendication 1, **caractérisé en ce que** le capteur acoustique est disposé sur la nacelle.

3. Procédé selon l'une quelconque des revendications 1 ou 2, **caractérisé en ce que**, pour identifier l'état de fonctionnement, un niveau d'émissions sonores de l'éolienne est enregistré.

4. Procédé selon l'une quelconque des revendications précédentes, **caractérisé en ce que** l'enregistrement du bruit est effectué avec une sensibilité à la direction.

5. Procédé selon l'une quelconque des revendications précédentes, **caractérisé en ce que** l'enregistrement du bruit est effectué dans au moins une bande de fréquences, dans laquelle apparaissent des bruits, qui sont à associer à une formation de gel au niveau de la pale de rotor.

6. Procédé selon l'une quelconque des revendications précédentes, **caractérisé en ce que** l'évaluation du bruit enregistré pour identifier l'état de fonctionnement est effectuée de manière externe, en particulier par un poste de surveillance.

7. Procédé selon l'une quelconque des revendications précédentes, **caractérisé en ce que** l'évaluation du bruit enregistré pour identifier l'état de fonctionnement est effectuée au moyen d'une analyse spectrale.

8. Dispositif de surveillance pour surveiller une éolienne avec une nacelle, comprenant
- un capteur acoustique disposé à l'extérieur ou au niveau de la nacelle, pour enregistrer un bruit, et
- un système d'évaluation pour évaluer le bruit enregistré à l'arrêt pour identifier un état de fonctionnement de l'éolienne, dans lequel
- le système d'évaluation est mis au point pour exécuter un procédé selon l'une quelconque des revendications 1 à 7.

9. Dispositif de surveillance selon la revendication 8, **caractérisé en ce que**
le capteur acoustique présente plusieurs microphones.

10. Dispositif de surveillance selon la revendication 9, **caractérisé en ce que** le capteur acoustique présente un réseau de microphones.

11. Dispositif de surveillance selon l'une quelconque des revendications 8 à 10, **caractérisé en ce qu'**une interface de données est prévue pour l'échange de données.

12. Dispositif de surveillance selon la revendication 11, **caractérisé en ce que** l'interface de données est prévue pour transmettre des données enregistrées par le capteur acoustique et/ou pour transmettre des données évaluées par le système d'évaluation.

13. Éolienne avec une nacelle et au moins un capteur acoustique disposé à l'extérieur au niveau de la nacelle, pour enregistrer des bruits, **caractérisée en ce que**
- un dispositif de surveillance selon l'une quelconque des revendications 8 à 12 est utilisé, et/ou
- qu'un procédé selon l'une quelconque des revendications 1 à 7 est exécuté.

14. Parc éolien comprenant au moins deux éoliennes, dans lequel au moins une éolienne selon la revendication 13 est utilisée et/ou un procédé selon l'une quelconque des revendications 1 à 7 est mis en œuvre.

15. Parc éolien avec au moins deux éoliennes, dans lequel les éoliennes sont interconnectées entre elles et sont préparées pour échanger des données par l'intermédiaire d'au moins un dispositif de surveillance selon l'une quelconque des revendications 8 à 12.
